# EUROPEAN PATENT SPECIFICATION

(11) **EP 2 876 332 B1**
(45) Date of publication and mention of the grant of the patent: **29.07.2020**
(21) Application number: 14275232.8
(22) Date of filing: 12.11.2014
(51) Int. Cl.: F16H 48/40, F16H 48/38

(54) **A combined coupling and differential assembly**
Kombinierte Kupplungs- und Differenzialbaugruppe
Ensemble différentiel et de couplage combiné

(30) Priority: 26.11.2013 GB 201320810
(43) Date of publication of application: 27.05.2015
(73) Proprietor: Ford Global Technologies, LLC, Dearborn, MI 48126 (US); Countytrac Limited, Ashford, Kent TN23 1EW (GB)
(72) Inventor: May, Eric, Sittingbourne, Kent ME10 2SZ (GB); Mather, John, Ashford, Kent TN23 1EW (GB)
(74) Representative: Haseltine Lake Kempner LLP

(56) References cited:
- WO-A2-2011/016950
- US-B1- 6 296 590

## Description

This invention relates to a motor vehicle having a selectable all-wheel drive facility and, in particular, to a combined coupling and differential assembly therefor.

It is known to provide a motor vehicle with a selectable all-wheel drive assembly. US Patent publication 2008/0103009 for example discloses a motor vehicle having a permanent two wheel drive to a front axle of the motor vehicle and a coupling to selectively connect a rear differential to the engine so as to provide an all-wheel drive mode.

The coupling and differential in US Patent publication 2008/0103009 are formed as separate units and are of a relatively bulky nature thereby making them difficult to package in a motor vehicle. This is particularly the case if the drive arrangement is reversed so that the rear wheels are permanently driven and drive to the front wheels is selectively connectable.

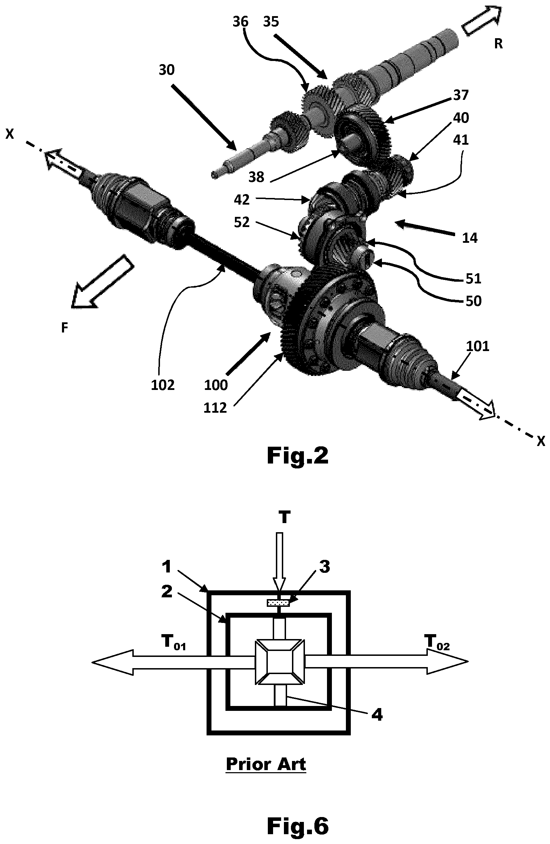

US Patent 6,699,151 discloses a more compact arrangement in which a coupling and a differential are packaged in a single housing arranged to rotate about an axis that is common with an axis of rotation of output shafts from the differential. The coupling in the form of a multi-plate clutch is interposed between the housing and the differential and the construction is shown in schematic form in Fig.6. Although this arrangement provides a very compact assembly the inventors have realised that the performance of this arrangement can be improved upon as embodied in this invention.

It is further known from US Patent 6,296,590 to provide a differential and coupling mounted in a common housing. It is a disadvantage of the arrangement disclosed in US Patent 6,296,590 that the operation of the differential is not isolated from the operation of the coupling because both components are located within a common bore. When the differential is transmitting torque an axial thrust due to the engagement of the side shaft gears with the bevel gears is produced and this axial thrust can cause unwanted partial engagement of the clutch pack to occur.

It is an object of the invention to provide a combined coupling and differential assembly of compact construction with improved performance.

According to the invention there is provided a combined coupling and differential assembly for a motor vehicle comprising a differential and an engageable coupling housed in a common housing that is rotatable about a central axis of rotation by means of a ring gear drivingly attached thereto to provide a torque input to the combined coupling and differential assembly, the differential is driven directly by the common housing and comprises a pinion shaft connected to the common housing rotatably supporting a pair of pinion gears and a pair of side gears arranged in meshing engagement with the two pinion gears, each of the side gears having a respective axis of rotation arranged coaxial with the axis of rotation of the common housing and is drivingly connected to a respective one of first and second output shafts, a first one of the pair of side gears being drivingly connectable through the engageable coupling to the first output shaft so as to provide a dis-connectable connection therebetween and a second one of the pair of side gears is drivingly connected to the second output shaft, the engageable coupling is a friction clutch comprising a clutch drum, a clutch hub and a number of clutch plates providing a dis-connectable connection between the clutch drum and the clutch hub characterised in that the clutch drum has a splined nose portion and the first side gear has a splined bore for splined engagement with the nose of the clutch drum so as to provide a driving connection therebetween and that a thrust bearing is interposed between the clutch drum and a differential housing forming part of the common housing and that a hydraulic actuation mechanism is provided for engaging and disengaging the engageable coupling comprising an annular actuator piston, a thrust ring having end portions for co-operation with thrust bearings located on each side of the thrust ring and a thrust plate to transfer force from the annular actuator piston, thrust ring and thrust bearings to the clutch plates of the engageable coupling.

The clutch drum may be rotatable about an axis of rotation and the axis of rotation of the clutch drum may be arranged coaxial with the axis of rotation of the common housing and the clutch hub may be rotatable about an axis of rotation and the axis of rotation of the clutch hub may be arranged coaxial with the axis of rotation of the common housing.

The clutch hub may have a splined bore and the first output shaft may have a splined end portion for splined engagement with the bore of the clutch hub so as to provide a driving connection therebetween.

Preferably, the common housing may comprise a coupling housing and the differential housing that are secured together to form the common housing.

The thrust ring may be slideably supported by the coupling housing.

The second side gear may have a splined bore and the second output shaft may have a splined end portion for splined engagement with the bore of the second side gear so as to provide a driving connection therebetween.

The first output shaft may have a respective axis of rotation arranged coaxial with the axis of rotation of the common housing and the second output shaft may have a respective axis of rotation arranged coaxial with the axis of rotation of the common housing.

According to a second aspect of the invention there is provided a motor vehicle having an engine and a transmission assembly including a combined coupling and differential assembly constructed in accordance with said first aspect of the invention.

The transmission assembly may include a transmission housing and the combined coupling and differential assembly may be rotatably supported by the transmission housing.

The motor vehicle may have first and second road wheels, the first output shaft may provide a drive path to the first road wheel of the motor vehicle and the second output shaft may provide a drive path to the second road wheel of the motor vehicle.

The invention will be described by way of example with reference to the accompanying drawing of which:
Fig.1 is a schematic plan view of a motor vehicle having a combined coupling and differential assembly according to the invention;
Fig.2 is an isometric view of an auxiliary drive gear system forming part of a transmission assembly for a motor vehicle showing the auxiliary drive system driving a combined coupling and differential assembly constructed in accordance with the present invention;
Fig.3 is an isometric view on an enlarged scale of the combined coupling and differential assembly shown in Fig.2;
Fig.4 is a cut-away side view of the combined coupling and differential assembly shown in Fig.3 in situ in a transmission casing;
Fig.5 is a cross-section through the combined coupling and differential assembly shown in Figs. 2 to 4;
Fig.6 is a schematic diagram of a prior art coupling and differential assembly; and
Fig.7 is a schematic diagram of a combined coupling and differential assembly in accordance with the invention.

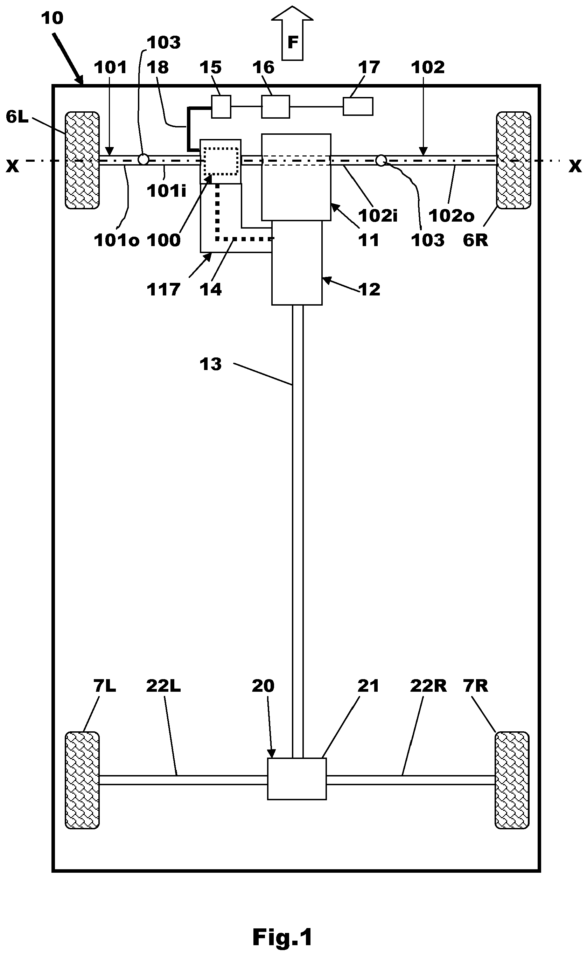

With reference to Fig.1, there is shown a motor vehicle 10 having an engine 11 arranged longitudinally in the motor vehicle 10. A forward direction of motion for the motor vehicle 10 is indicated by arrows "F" on Figs.1 and 2 and a rear direction of motion is indicated by the arrow "R" on Fig.2.

A transmission assembly 12 is mounted on the rear of the engine via a bell housing (not shown). The transmission assembly 12 is arranged with its primary drive connected to rear wheels 7L and 7R which are driven by a transmission main shaft 35 (see Fig 2) via a conventional propshaft 13 and rear axle 20 including a differential unit 21 and drive shafts 22L and 22R.

The transmission assembly 12 also includes an auxiliary final drive gear system 14 which drives the front wheels 6L and 6R and includes a transmission housing 117. The auxiliary final drive system 14 is arranged to drive a combined coupling and differential assembly 100 which selectively provides drive to the front wheels 6L and 6R via respective left and right drive shafts 101,102.

The left hand drive shaft 101 has inner and outer parts 101i, 101o respectively joined together by a constant velocity or universal joint 103.

The right hand drive shaft 102 has inner and outer parts 102i, 102o respectively joined together by a constant velocity or universal joint 103.

An electro-hydraulic actuation system for a coupling 130 of the combined coupling and differential assembly 100 is provided by a source of hydraulic power 15 controlled by an electronic controller 16. A human machine interface 17 is also provided to allow an operator of the motor vehicle 10 to select or deselect drive to the front wheels 6L, 6R. The source of hydraulic power 15 is connected to an actuator of the combined coupling and differential assembly 100 by a pipe or conduit 18 and in this case comprises a pump (not shown), a reservoir (not shown) and one or more electro-hydraulic valves (not shown) controlled by the electronic controller 16.

With particular reference to Fig.2, an input shaft 30 from a clutch (not shown) interposed between the engine 10 and the transmission assembly 12 drives the main shaft 35. The auxiliary drive for the front wheels 6L, 6R is taken off the main shaft 35 via the auxiliary final drive gear system 14 which includes a transfer gear 37 that meshes with a gear 36 rotatable with the main shaft 35. The transfer gear 37 is mounted on a shaft 38 and meshes with a driven gear 41 mounted on a shaft 40. The shaft 40 has a bevel gear 42 mounted fast on the opposite end to the driven gear 41. A second bevel gear 52 and a helical pinion gear 51 are fixed fast on a transverse shaft 50. The bevel gear 42 is meshed with the second bevel gear 52 so as to drive the transverse shaft and hence the helical pinion gear 51.

The helical pinion gear 51 meshes with a helical ring gear 112 fastened to a differential housing 110 of the combined coupling and differential assembly 100 so as to provide a continuous drive from the main shaft 35 to the combined coupling and differential assembly 100.

The transverse shaft 50 is arranged parallel to a transverse axis X-X about which the differential housing 110 and helical ring gear 112 rotate.

When the motor vehicle 10 is driving normally along a road, the primary drive is through the differential 21 and back axle 20. An engageable coupling 130 of the combined coupling and differential assembly 100 is in this case in a disengaged state and the front wheels 6L, 6R rotate freely because there is no drive through the combined coupling and differential assembly 100 to the front wheels 6L, 6R.

If in a particular situation, the rear wheels 7L, 7R begin to slip then the engageable coupling 130 of the combined coupling and differential assembly 100 can be engaged either automatically by the electronic controller 16 or via a user of the motor vehicle 10 using the human machine interface 17 depending upon the configuration and construction of the motor vehicle 10. When the engageable coupling 130 of the combined coupling and differential assembly 100 is engaged, drive is transmitted, as will be described in more detail hereinafter, to the front wheels 6L, 6R from the engine 11 via the transmission assembly 12, auxiliary final drive gear system 14 and front drive shafts 101,102 so as to supplement the drive from the rear wheels 7L, 7R.

With particular reference to Figs.2 to 5, the combined coupling and differential assembly 100 shown in Fig.1 will be described in more detail.

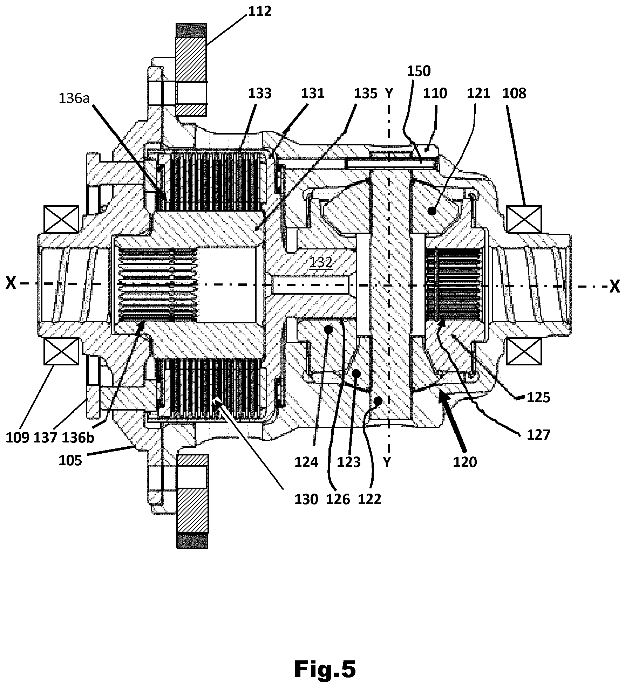

Fig.5 is a cross-sectional view illustrating the structure of the combined coupling and differential assembly 100, taken along a plane containing a longitudinal central axis Y-Y of a pinion shaft 122 and a central axis of rotation X-X of a housing of the combined coupling and differential assembly 100.

The housing is formed by a coupling housing 105 and a differential housing 110 which are secured together by a number of bolts 106. The helical ring gear 112 is fixed to a radially outer flange portion of the differential housing 110 by the same bolts 106 used to fasten the coupling and differential housings 105, 110 together.

The combined coupling and differential assembly 100 is accommodated in the transmission housing 117 and is rotatably supported by the housing 117 for rotation about the axis of rotation X-X of the housing by means of a pair of spaced apart bearings 108, 109.

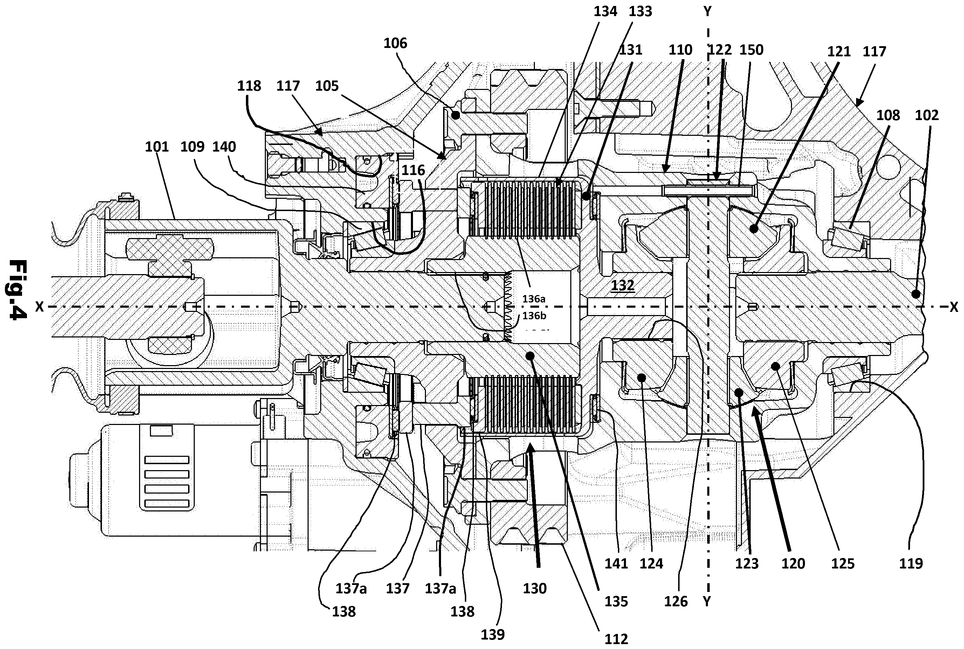

The bearing 108 has an inner race engaged with a nose portion of the differential housing 110 and an outer race engaged with a recess 119 (Fig.4) in the transmission housing 117. The bearing 109 has an inner race engaged with a nose portion of the coupling housing 105 and an outer race engaged with a recess 116 (Fig.4) in the transmission housing 117.

The nose on the coupling housing 105 rotatably supports a first output shaft in the form of the left hand drive shaft 101 and the nose on the differential housing 110 rotatably supports a second output shaft in the form of the right hand drive shaft 102.

The respective axes of rotation of the pair of drive shafts 101, 102 as they exit the combined coupling and differential assembly 100, are arranged to be coaxial with the axis of rotation X-X of the housing.

Therefore the helical ring gear 112, the coupling housing 105, the differential housing 110 and the inner ends of the drive shafts 101, 102 are all coaxially arranged for rotation about a common axis which is the central axis of rotation X-X of the housing.

It will be appreciated that if constant velocity joints or universal joints such as those shown on Fig.1 are fitted to the drive shafts 101, 102 then the axes of rotation of the portions (101o, 102o on Fig.1) of the drive shafts 101,102 outboard of these joints (103 on Fig.1) may not correspond to the axes of rotation of the portions (101i, 102i on Fig.1) of the drive shafts 101, 102 inboard of the joints (103 on Fig.1) where they enter the combined coupling and differential assembly 100.

A differential 120 forming part of the combined coupling and differential assembly 100 comprises the pinion shaft 122, a pair of side gears 124, 125 and a pair of the pinion gears 121, 123 rotatably mounted on the pinion shaft 122.

Both end portions of the pinion shaft 122 are supported by the differential housing 110 and the pinion shaft 122 is fixed to the differential housing 110 with a drive pin 150 such that the pinion shaft 122 has a longitudinal axis Y-Y arranged perpendicular to the axis of rotation X-X of the housing.

The pair of side gears 124, 125 is disposed such that they are opposed to each other on opposite sides of the pinion shaft 122 and are accommodated within the differential housing 110 with the pinion gears 121, 123 and the pinion shaft 122. Furthermore, the side gears 124, 125 are disposed rotatably about an axis that is coaxial with the axis of rotation X-X of the housing and, in particular, coaxial with the axis of rotation of the differential housing 110.

The pinion gears 121, 123 are rotatably supported by the pinion shaft 122 and rotate with the pinion shaft 122 when the differential housing 110 is rotated about its axis of rotation.

The pinion gears 121, 123 both have outer peripheral teeth that are in meshing engagement with corresponding teeth on both of the side gears 124, 125.

The right hand side gear 125 has an internal splined bore 127 that provides a driving connection to the right front drive shaft 102 which includes a complementary splined end portion.

The left hand side gear 124 has an internal splined bore 126 engaged with a complementary spline formed on a nose portion 132 of a clutch drum 131. A thrust bearing 141 is interposed between the clutch drum 131 and the differential housing 110. The clutch drum 131 has an outer cylindrical rim portion 134 having a castellated or splined inner surface for providing a driving connection between the clutch drum 131 and a clutch hub 135 by means of a number of clutch plates 133 interposed therebetween. Alternate outer and inner clutch plates 133 are respectively engaged with the rim portion 134 and the clutch hub 135. The clutch hub 135 has an external castellated or splined surface 136a for providing a driving connection between the clutch drum 131 and the inner clutch plates with which it co-operates.

Therefore in this case the coupling 130 forming part of the combined coupling and differential assembly 100 is in the form of a conventional multi-plate clutch assembly comprising the clutch drum 131, the clutch hub 135 and the clutch plates 133.

The clutch hub 135 has a splined bore 136b for co-operation with complementary splines formed on an inner end portion of the left hand drive shaft 101 so as to form a driving connection therebetween.

The left and right hand drive shafts 101 and 102 therefore form first and second output shafts from the combined coupling and differential assembly 100.

A hydraulic actuation mechanism is provided for engaging and disengaging the coupling 130. The hydraulic actuation mechanism comprises an annular actuator piston 140 slidingly located in an annular recess 118 in the transmission housing 117, a thrust ring 137 having end portions 137a for co-operation with thrust bearings 138 located on each side of the thrust ring 137 and a thrust plate 139 to transfer force from the annular actuator piston 140, thrust ring 137 and thrust bearings 138 to the clutch plates 133. The thrust ring 137 is slideably supported by apertures in the coupling housing 105.

A supply of hydraulic pressure is selectively supplied to the annular recess 118 in the transmission housing 117 from the source of hydraulic pressure 15 via the pipe or conduit 18.

Operation of the combined coupling and differential assembly 100 is as follows, when external pressure is applied from the source of hydraulic pressure 15 the annular recess 118 in the transmission cover 117 is pressurised and forces the annular actuator piston 140 out thereby forcing the inner and outer clutch plates 133 together so as to clamp them together and form a driving connection between the clutch hub 135 and the side gear 124.

The differential side gear 124 is then connected to the left hand output shaft 101 via the clutch drum 131 and the clutch hub 135. In this state the coupling 130 is said to be 'engaged' or 'closed'.

Because the arrangement of the differential 120 is such that it is a torque balancing device, the torque transmitted through the coupling 130 to the left hand output shaft 101 will be the same as the torque transmitted to the right hand output shaft 102 by its splined engagement with the differential side gear 125.

Therefore any torque applied via the ring gear 112 to the differential housing 110 is distributed through the differential 120 to the front road wheels 6L, 6R because the coupling 130 in the form of the multi-plate clutch is not free to slip. The differential 120 acts in this case like a conventional open differential.

When the external pressure is released in response to a controlling signal from the electronic controller 16, the pressure in the annular recess 118 will decay and this allows the annular piston 140 to return or retract into the annular recess 118. It will be appreciated that the source of hydraulic power 15 may include an electronically controlled relief valve or a separate relief valve may be provided under the control of the electronic controller 16.

When the piston 140 retracts this allows the inner and outer clutch plates 133 to move apart thereby breaking the drive path through the coupling 130. The differential side gear 124 is thereby disconnected from the left hand output shaft 101. The coupling 130 in this case is said to be 'dis-engaged' or 'open'.

As before, because the differential 120 is a torque balancing device, the torque transmitted through the coupling to the left hand output shaft 101 will be the same as the torque transmitted to the right hand output shaft 102. Because there is no connection between the left hand output shaft 101 and the differential side gear 124 the torque transmitted in this case is substantially zero and so the torque transmitted to the right hand output shaft 102 is also substantially zero.

Therefore any torque applied via the ring gear 112 to the differential housing 110 will not be distributed through the differential 120 to the front road wheels 6L, 6R because the coupling 130 is free to slip.

Although the invention has been applied with respect to a combined coupling and differential assembly used to selectively connect the front wheels of a motor vehicle to form an all-wheel drive vehicle it will be appreciated that it could also be used to selectively connect rear wheels of a motor vehicle if the front wheels are permanently driven.

One advantage of the invention is that it provides improved performance compared to the prior art design shown in US Patent 6,699,151 referred to above.

Fig.6 shows in a schematic form the combined coupling and differential assembly described in US patent 6,699,151.

The arrow "T" represents the torque input to a housing 1 of the combined coupling and differential assembly shown in the Patent. A clutch 3 is interposed between the housing 1 and a carrier 2 for a differential 4. The differential 4 has a pinion shaft connected to the carrier 2 and rotatably supports a pair of pinion gears. A pair of side gears is arranged in meshing engagement with the two pinion gears. Each side gear is permanently drivingly connected to a respective output shaft T₀₁, T₀₂ that provides a drive path to a respective road wheel (not shown). If the clutch 3 is disengaged then no torque can be transferred to the output shafts T₀₁, T₀₂ because there is no drive path between the housing 1 and the carrier 2. However, when the clutch 3 is engaged to provide a drive path from the housing 1 to the carrier 2, then torque can be transferred from the housing 1 via the carrier 2 to both of the output shafts T₀₁, T₀₂.

If the clutch 3 is engaged and the torque capacity of the clutch 3 is 2000 Nm, then the maximum input torque at the carrier 2 cannot exceed 2000 Nm. The maximum torque at each output shaft T₀₁, T₀₂ will therefore be 1000 Nm per side because the differential 4 is a torque balancing device.

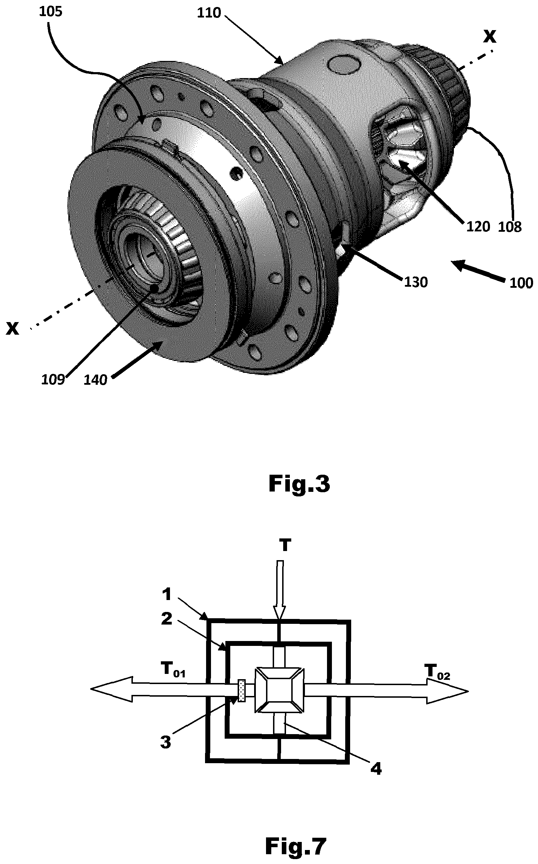

Referring now to Fig.7 which shows in a schematic form a combined coupling and differential assembly constructed in accordance with this invention.

The arrow "T" represents the torque input to a housing 1 of the combined coupling and differential which in this case also forms a carrier 2 for a differential 4. That is to say, the differential 4 is driven directly by the housing 1.

The differential 4 as before has a pinion shaft connected to the carrier 2 that rotatably supports a pair of pinion gears. A pair of side gears is arranged in meshing engagement with the two pinion gears.

One of the side gears is drivingly connected to a first output shaft T₀₁ to provide a drive path to a respective road wheel (not shown) via a clutch 3. The other side gear is permanently driveably connected to a second output shaft T₀₂ to provide a drive path to a respective road wheel (not shown).

If the clutch 3 is disengaged no torque can be transmitted to the road wheels. This is because the torque that can be transmitted to the first output shaft T₀₁ will be substantially zero due to the disengaged state of the clutch 3 and, because the differential 4 is a torque balancing device, the torque supplied to the second output shaft T₀₂ must therefore also be substantially zero.

With this arrangement, if the clutch 3 is engaged and the torque capacity of the clutch 3 is, as for Fig.6, 2000 Nm, then the maximum input torque at the housing 1 must not exceed 4000 Nm. This is because the maximum torque for the first output shaft T₀₁ is 2000 Nm and the maximum torque for the second output shaft T₀₂ must be the same because the differential 4 is a torque balancing device.

Therefore, if the clutch 3 has a maximum torque capacity of 2000 Nm, the maximum torque at each output shaft T₀₁, T₀₂ will be limited to 2000 Nm per side due to the location of the clutch 3.

Therefore, in the case of the prior art combined coupling and differential assembly shown in Fig.6, a clutch with a capacity of 2000 Nm can only transmit 1000 Nm to each wheel whereas, in the case of the combined coupling and differential assembly constructed in accordance with the invention, the use of a clutch with a capacity of 2000 Nm allows 2000 Nm to be transmitted to each wheel.

This provides either, a combined coupling and differential assembly with increased torque transfer capacity to each wheel for the same torque capacity clutch or the opportunity to reduce the size and torque capacity of the clutch to produce a smaller combined coupling and differential assembly for a predefined maximum wheel drive torque requirement.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A combined coupling and differential assembly (100) for a motor vehicle (10) comprising a differential (120) and an engageable coupling (130) housed in a common housing (105, 110) that is rotatable about a central axis of rotation (X-X) by means of a ring gear (112) drivingly attached thereto to provide a torque input to the combined coupling and differential assembly (100), the differential (120) is driven directly by the common housing (105, 110) and comprises a pinion shaft (122) connected to the common housing (105,110) rotatably supporting a pair of pinion gears (121, 123) and a pair of side gears (124, 125) arranged in meshing engagement with the two pinion gears (121, 123), each of the side gears (124, 125) having a respective axis of rotation arranged coaxial with the axis of rotation (X-X) of the common housing (105, 110) and is drivingly connected to a respective one of first and second output shafts (101 and 102), a first one (124) of the pair of side gears (124, 125) being drivingly connectable through the engageable coupling (130) to the first output shaft (101) so as to provide a dis-connectable connection therebetween and a second one (125) of the pair of side gears (124, 125) is drivingly connected to the second output shaft (102), the engageable coupling (130) is a friction clutch comprising a clutch drum (131), a clutch hub (135) and a number of clutch plates (133) providing a dis-connectable connection between the clutch drum (131) and the clutch hub (135) **characterised in that** the clutch drum (131) has a splined nose portion (132) and the first side gear (124) has a splined bore (126) for splined engagement with the nose (132) of the clutch drum (131) so as to provide a driving connection therebetween and that a thrust bearing (141) is interposed between the clutch drum (131) and a differential housing (110) forming part of the common housing (105, 110) and that a hydraulic actuation mechanism is provided for engaging and disengaging the engageable coupling (130) comprising an annular actuator piston (140), a thrust ring (137) having end portions (137a) for co-operation with thrust bearings (138) located on each side of the thrust ring (137) and a thrust plate (139) to transfer force from the annular actuator piston (140), thrust ring (137) and thrust bearings (138) to the clutch plates (133) of the engageable coupling (130) .

2. The assembly as claimed in claim 1 wherein the clutch drum (131) is rotatable about an axis of rotation and the axis of rotation of the clutch drum (131) is arranged coaxial with the axis of rotation (X-X) of the common housing 105, 110) and the clutch hub (135) is rotatable about an axis of rotation and the axis of rotation of the clutch hub (135) is arranged coaxial with the axis of rotation (X-X) of the common housing (105, 110).

3. The assembly as claimed in claim 1 or in claim 2 wherein the clutch hub (135) has a splined bore (136b) and the first output shaft (101) has a splined end portion for splined engagement with the bore (136b) of the clutch hub (135) so as to provide a driving connection therebetween.

4. The assembly as claimed in any of claims 1 to 3 wherein the common housing (105, 110) comprises a coupling housing (105) and the differential housing (110) that are secured together to form the common housing (105, 110).

5. The assembly as claimed in claim 4 wherein the thrust ring (137) is slideably supported by the coupling housing (105).

6. The assembly as claimed in any of claims 1 to 5 wherein the second side gear (125) has a splined bore and the second output shaft (102) has a splined end portion for splined engagement with the bore of the second side gear (125) so as to provide a driving connection therebetween.

7. The assembly as claimed in any of claims 1 to 6 wherein the first output shaft (101) has a respective axis of rotation arranged coaxial with the axis of rotation (X-X) of the common housing (105, 110) and the second output shaft (102) has a respective axis of rotation arranged coaxial with the axis of rotation (X-X) of the common housing (105, 110) .

8. A motor vehicle (10) having an engine (11) and a transmission assembly (12) including the combined coupling and differential assembly (100) as claimed in any of claims 1 to 7.

9. The motor vehicle (10) as claimed in claim 8 wherein the transmission assembly (12) includes a transmission housing (117) and the combined coupling and differential assembly (100) is rotatably supported by the transmission housing (117).

10. The motor vehicle (10) as claimed in claim 8 or in claim 9 wherein the motor vehicle has first and second road wheels (6L and 6R), the first output shaft (101) provides a drive path to the first road wheel (6L) of the motor vehicle (10) and the second output shaft (102) provides a drive path to the second road wheel (6R) of the motor vehicle (10).

## Patentansprüche

1. Kombinierte Kupplungs- und Differenzialanordnung für ein Kraftfahrzeug (10), umfassend ein Differenzial (120) und eine einrückbare Kupplung (130), die in einem gemeinsamen Gehäuse (105, 110) untergebracht sind, das mittels eines antriebsmäßig daran befestigten Zahnkranzes (112) um eine mittlere Drehachse (X-X) drehbar ist, um einen Drehmomenteingang zu der kombinierten Kupplungs- und Differenzialanordnung (100) bereitzustellen, wobei das Differenzial (120) direkt durch das gemeinsame Gehäuse (105, 110) angetrieben wird und eine Ritzelwelle (122) umfasst, die mit dem gemeinsamen Gehäuse (105, 110) verbunden ist und ein Paar von Ritzeln (121, 123) und ein Paar von Achswellenrädern (124, 125) drehbar trägt, die in Kammeingriff mit den zwei Ritzeln (121, 123) angeordnet sind, jedes der Achswellenräder (124, 125) eine jeweilige Drehachse aufweist, die koaxial mit der Drehachse (X-X) des gemeinsamen Gehäuses (105, 110) angeordnet ist und antriebsmäßig mit einer jeweiligen ersten und zweiten Ausgangswelle (101 und 102) verbunden ist, wobei ein erstes (124) des Paars von Achswellenrädern (124, 125) antriebsmäßig durch die einrückbare Kupplung (130) mit der ersten Ausgangswelle (101) verbunden werden kann, um eine lösbare Verbindung dazwischen bereitzustellen, und ein zweites (125) des Paars von Achswellenrädern (124, 125) antriebsmäßig mit der zweiten Ausgangswelle (102) verbunden ist, wobei die eingreifbare Kupplung (130) eine Reibungskupplung ist, umfassend eine Kupplungstrommel (131), eine Kupplungsnabe (135) und eine Anzahl von Kupplungsscheiben (133), die eine lösbare Verbindung zwischen der Kupplungstrommel (131) und der Kupplungsnabe (135) bereitstellen, **dadurch gekennzeichnet, dass** die Kupplungstrommel (131) einen kerbverzahnten Nasenabschnitt (132) aufweist und das erste Achswellenrad (124) eine kerbverzahnte Bohrung (126) für einen kerbverzahnten Eingriff mit der Nase (132) der Kupplungstrommel (131) aufweist, um eine Antriebsverbindung dazwischen bereitzustellen, und dass ein Drucklager (141) zwischen der Kupplungstrommel (131) und einem Differenzialgehäuse (110) zwischengestellt ist, das einen Teil des gemeinsamen Gehäuses (105, 110) bildet, und dass ein hydraulischer Betätigungsmechanismus zum Ein- und Ausrücken der einrückbaren Kupplung (130) bereitgestellt ist, umfassend einen ringförmigen Betätigungskolben (140), einen Druckring (137), der Endabschnitte (137a) zum Zusammenwirken mit Drucklagern (138), die auf jeder Seite des Druckrings (137) angeordnet sind, und eine Druckplatte (139), um Kraft von dem ringförmigen Betätigungskolben (140), dem Druckring (137) und den Drucklagern (138) auf die Kupplungsscheiben (133) der einrückbaren Kupplung (130) zu übertragen, aufweist.

2. Anordnung gemäß Anspruch 1, wobei die Kupplungstrommel (131) um eine Drehachse drehbar ist und die Drehachse der Kupplungstrommel (131) koaxial mit der Drehachse (X-X) des gemeinsamen Gehäuses (105, 110) angeordnet ist und die Kupplungsnabe (135) um eine Drehachse drehbar ist und die Drehachse der Kupplungsnabe (135) koaxial mit der Drehachse (X-X) des gemeinsamen Gehäuses (105, 110) angeordnet ist.

3. Anordnung gemäß Anspruch 1 oder 2, wobei die Kupplungsnabe (135) eine kerbverzahnte Bohrung (136b) aufweist und die erste Ausgangswelle (101) einen kerbverzahnten Endabschnitt für einen Kerbverzahnungseingriff mit der Bohrung (136b) der Kupplungsnabe (135) aufweist, um eine Antriebsverbindung dazwischen bereitzustellen.

4. Anordnung gemäß einem der Ansprüche 1 bis 3, wobei das gemeinsame Gehäuse ein Kupplungsgehäuse (105) und das Differenzialgehäuse (110) umfasst, die miteinander befestigt sind, um das gemeinsame Gehäuse (105, 110) zu bilden.

5. Anordnung gemäß Anspruch 4, wobei der Druckring (137) verschiebbar vom Kupplungsgehäuse (105) getragen wird.

6. Anordnung gemäß einem der Ansprüche 1 bis 5, wobei das zweite Achswellenrad (125) eine kerbverzahnte Bohrung und die zweite Ausgangswelle (102) einen kerbverzahnten Endabschnitt zum kerbverzahnten Eingriff mit der Bohrung des zweiten Achswellenrads (125) aufweist, um eine Antriebsverbindung dazwischen bereitzustellen.

7. Anordnung gemäß einem der Ansprüche 1 bis 6, wobei die erste Ausgangswelle (101) eine jeweilige Drehachse aufweist, die koaxial mit der Drehachse (X-X) des gemeinsamen Gehäuses (105, 110) angeordnet ist, und die zweite Ausgangswelle (102) eine jeweilige Drehachse aufweist, die koaxial mit der Drehachse (X-X) des gemeinsamen Gehäuses (105, 110) angeordnet ist.

8. Kraftfahrzeug (10), das einen Motor (11) und eine Getriebeanordnung (12) einschließlich der kombinierten Kupplungs- und Differenzialanordnung (100) gemäß einem der Ansprüche 1 bis 7 aufweist.

9. Kraftfahrzeug (10) gemäß Anspruch 8, wobei die Getriebeanordnung (12) ein Getriebegehäuse (117) beinhaltet und die kombinierte Kupplungs- und Differenzialanordnung (100) durch das Getriebegehäuse (117) drehbar getragen wird.

10. Kraftfahrzeug (10) gemäß Anspruch 8 oder 9, wobei das Kraftfahrzeug ein erstes und ein zweites Laufrad (6L und 6R) aufweist, die erste Ausgangswelle (101) einen Antriebsweg zu dem ersten Laufrad (6L) des Kraftfahrzeugs (10) bereitstellt und die zweite Ausgangswelle (102) einen Antriebsweg zu dem zweiten Laufrad (6R) des Kraftfahrzeugs (10) bereitstellt.

## Revendications

1. Un ensemble de couplage et de différentiel combiné (100) pour un véhicule à moteur (10) comprenant un différentiel (120) et un couplage engageable (130) logé dans un boîtier commun (105, 110) qui peut tourner autour d'un axe central de rotation (X-X) au moyen d'une couronne de train planétaire (112) qui est fixée en entraînement à celui-ci pour fournir une entrée de couple à l'ensemble de couplage et de différentiel combiné (100), le différentiel (120) est entraîné directement par le boîtier commun (105, 110) et comprend un arbre de pignon (122) connecté au boîtier commun (105, 110) supportant de manière rotative une paire d'engrenages à pignons (121, 123) et une paire d'engrenages latéraux (124, 125) disposés en engrènement avec les deux engrenages à pignons (121, 123), chacun des engrenages latéraux (124, 125) ayant un axe de rotation respectif disposé coaxialement à l'axe de rotation (X-X) du boîtier commun (105, 110) et est connecté en entraînement à un arbre de sortie respectif parmi les premier et deuxième arbres de sortie (101 et 102), un premier engrenage latéral (124) parmi la paire d'engrenages latéraux (124, 125) pouvant être connecté en entraînement à travers le couplage engageable (130) au premier arbre de sortie (101) de manière à fournir une connexion déconnectable entre ceux-ci et un deuxième engrenage latéral (125) parmi la paire d'engrenages latéraux (124, 125) est connecté en entraînement au deuxième arbre de sortie (102), le couplage engageable (130) est un embrayage à friction comprenant un tambour d'embrayage (131), un moyeu d'embrayage (135) et un certain nombre de disques d'embrayage (133) fournissant une connexion déconnectable entre le tambour d'embrayage (131) et le moyeu d'embrayage (135) **caractérisé en ce que** le tambour d'embrayage (131) a une partie de nez cannelée (132) et le premier engrenage latéral (124) a un alésage cannelé (126) pour un engagement cannelé avec le nez (132) du tambour d'embrayage (131) de manière à fournir une connexion d'entraînement entre ceux-ci et qu'un palier de butée (141) est interposé entre le tambour d'embrayage (131) et un boîtier de différentiel (110) faisant partie du boîtier commun (105, 110) et qu'un mécanisme d'actionnement hydraulique est prévu pour engager et désengager le couplage engageable (130) comprenant un piston d'actionnement annulaire (140), une bague de butée (137) ayant des parties d'extrémité (137a) pour coopérer avec des paliers de butée (138) situés de chaque côté de la bague de butée (137) et une plaque de butée (139) pour transférer la force à partir du piston d'actionnement annulaire (140), de la bague de butée (137) et des paliers de butée (138) vers les disques d'embrayage (133) du couplage engageable (130).

2. L'ensemble selon la revendication 1 dans lequel le tambour d'embrayage (131) peut tourner autour d'un axe de rotation et l'axe de rotation du tambour d'embrayage (131) est disposé coaxialement à l'axe de rotation (X-X) du boîtier commun (105, 110) et le moyeu d'embrayage (135) peut tourner autour d'un axe de rotation et l'axe de rotation du moyeu d'embrayage (135) est disposé coaxialement à l'axe de rotation (X-X) du boîtier commun (105, 110).

3. L'ensemble selon la revendication 1 ou la revendication 2 dans lequel le moyeu d'embrayage (135) a un alésage cannelé (136b) et le premier arbre de sortie (101) a une partie d'extrémité cannelée pour un engagement cannelé avec l'alésage (136b) du moyeu d'embrayage (135) de manière à fournir une connexion d'entraînement entre ceux-ci.

4. L'ensemble selon l'une quelconque des revendications 1 à 3 dans lequel le boîtier commun (105, 110) comprend un boîtier de couplage (105) et le boîtier de différentiel (110) qui sont fixés ensemble pour former le boîtier commun (105, 110).

5. L'ensemble selon la revendication 4 dans lequel la bague de butée (137) est supportée de manière coulissante par le boîtier de couplage (105).

6. L'ensemble selon l'une quelconque des revendications 1 à 5 dans lequel le deuxième engrenage latéral (125) a un alésage cannelé et le deuxième arbre de sortie (102) a une partie d'extrémité cannelée pour un engagement cannelé avec l'alésage du deuxième engrenage latéral (125) de manière à fournir une connexion d'entraînement entre ceux-ci.

7. L'ensemble selon l'une quelconque des revendications 1 à 6 dans lequel le premier arbre de sortie (101) a un axe de rotation respectif disposé coaxialement à l'axe de rotation (X-X) du boîtier commun (105, 110) et le deuxième arbre de sortie (102) a un axe de rotation respectif disposé coaxialement à l'axe de rotation (X-X) du boîtier commun (105, 110).

8. Un véhicule à moteur (10) ayant un moteur (11) et un ensemble de transmission (12) comprenant l'ensemble de couplage et de différentiel combiné (100) selon l'une quelconque des revendications 1 à 7.

9. Le véhicule à moteur (10) selon la revendication 8 dans lequel l'ensemble de transmission (12) comprend un boîtier de transmission (117) et l'ensemble de couplage et de différentiel combiné (100) est supporté de manière rotative par le boîtier de transmission (117).

10. Le véhicule à moteur (10) selon la revendication 8 ou la revendication 9 dans lequel le véhicule à moteur a une première et une deuxième roues de route (6L et 6R), le premier arbre de sortie (101) fournit un trajet d'entraînement à la première roue de route (6L) du véhicule à moteur (10) et le deuxième arbre de sortie (102) fournit un trajet d'entraînement à la deuxième roue de route (6R) du véhicule à moteur (10).
